# EUROPEAN PATENT APPLICATION

(11) **EP 4 557 390 A1**
(43) Date of publication of application: **21.05.2025**
(21) Application number: 24764098.0
(22) Date of filing: 02.02.2024
(51) Int. Cl.: H01M 4/04, F26B 13/10, F26B 25/06, F26B 21/10, F26B 3/30, H05B 3/00

(54) **ELECTRODE DRYING DEVICE AND ELECTRODE DRYING METHOD**

(30) Priority: 27.02.2023 KR 20230026101
(71) Applicant: LG Energy Solution, Ltd., Seoul 07335 (KR)
(72) Inventor: JANG, Woo Sun, Daejeon 34122 (KR); KANG, Tae Won, Daejeon 34122 (KR)
(74) Representative: Plasseraud IP
(86) International application number: PCT/KR2024/001627
(87) International publication number: WO 2024/181698

(57) **Abstract**

The present technology provides an electrode drying device including: a heating chamber with an electrode inlet and an electrode outlet, wherein an electrode is installed to be driven between the electrode inlet and the electrode outlet; a heating member installed in the heating chamber to heat the electrode at a final heating zone before the electrode outlet; and a controller configured to variably control an output of the heating member in response to a change in a temperature of the electrode, which is measured between the final heating zone and the electrode outlet, according to an operation time of the electrode drying device.

**In** addition, the present technology provides an electrode drying method using the electrode drying device.

## Description

### [Technical Field]

The present invention relates to an electrode drying device and an electrode drying method.

Specifically, the present invention relates to an electrode drying device and method for variably controlling an output of a heating member that heats an electrode in response to a change in an initial temperature of the electrode that is repeatedly driven and stopped in a heating chamber configured to dry an electrode.

This application claims the benefit of priority based on Korean Patent Application No. 10-2023-0026101, filed on February 27, 2023, and the entire content of the Korean patent application is incorporated herein by reference.

### [Background Art]

A secondary battery is manufactured by putting an electrode assembly in a battery case and injecting an electrolyte. The electrode assembly has a structure in which a positive electrode and a negative electrode are stacked with a separator interposed therebetween.

An electrode such as a positive or negative electrode is manufactured by coating a current collector with an active material slurry. After the coating process, the electrode is dried to remove moisture in the active material slurry. In addition, in order to remove moisture that is inevitably mixed in the electrode during a secondary battery manufacturing process, the electrode may be dried in a subsequent process such as a notching process or other sub-processes even after the coating process.

During the drying of the electrode, the electrode is dried in a heating chamber while being transferred in a roll-to-roll state. The electrode installed in the heating chamber is dried by a heating member installed in the heating chamber while being repeatedly driven and stopped. The electrode when stopped is accelerated until a target driving speed is reached, and is driven at a constant speed when the target driving speed is reached.

Meanwhile, it is important to stabilize a temperature of the electrode in the heating chamber within a short time period in terms of quality stability of the electrode and operational productivity. Electrodes installed in the heating chamber are discharged continuously through an electrode outlet of the heating chamber, starting from an electrode adjacent to the electrode outlet. The electrodes pass through a final heating zone installed before the electrode outlet. Points in time when the electrodes pass through the final heating zone may vary according to the positions of the electrode, thus causing a change in a temperature of the electrodes at the beginning of the discharging of the electrodes. The temperature of the electrodes may also vary according to a total number or location of heating zones in the heating chamber, a driving speed of the electrodes, or a change in the driving speed.

When it takes a long time until the temperature of the electrodes stabilizes, it means that the quality of electrodes manufactured during the stabilization of the temperature are unstable. During an operation, the electrodes are repeatedly stopped and driven in the heating chamber, and thus, the number of electrodes with unstable quality increases when a time required to stabilize a temperature of the electrodes increases. In some cases, electrodes of unstable quality may cause defects and thus should be removed. In this case, overall operational productivity will inevitably decrease.

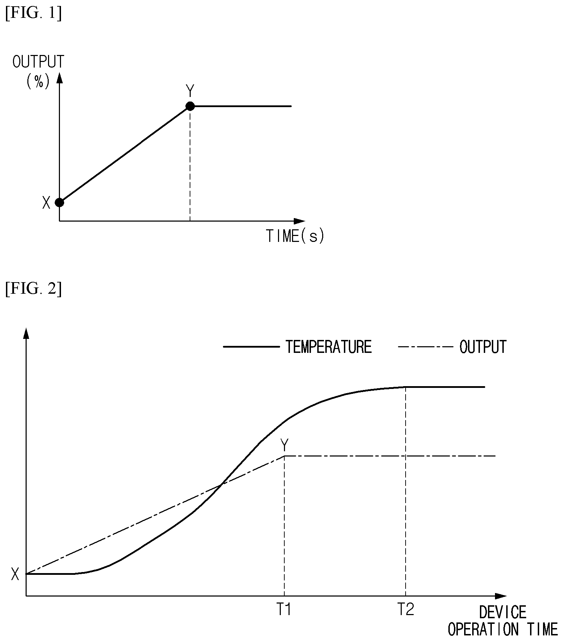

FIGS. 1 to 3 are graphs showing a principle of controlling an output of a heating member in an electrode drying process of the related art.

As shown in FIG. 1, in the electrode drying process of the related art, in order to make a temperature of an electrode reach a target temperature within a short time period, an initial output X of a heating member installed at a final heating zone is increased in response to an increase in a driving speed of the electrode at the beginning of the driving of the electrode. In addition, an output of the heating member at a point in time when the driving speed reaches a target driving speed is set as a constant speed output Y, and the electrode is heated according to the constant speed out Y after the point in time.

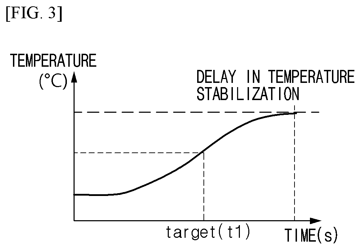

FIGS. 2 and 3 illustrate a change in a temperature of an electrode versus a change in an output. It can be seen from FIGS. 2 and 3 that it takes a time T1 to reach the target driving speed and it takes a device operation time T2 longer than the time T1 until the temperature of the electrode stabilizes. That is, a relatively long device operation time is required until the temperature of the electrode stabilizes. When a time required until the temperature of the electrode stabilizes can be decreased to a target time t1 of FIG. 3, the quality stability of the electrode and operational productivity will significantly improve.

### [Related Art Literature]

### [Patent Document]

Korean Patent Laid-open Publication No. 10-2022-0068179

### [Disclosure]

### [Technical Problem]

To address the above-described problem, the present invention is directed to providing an electrode drying device and method for variably controlling an output of a heating member by taking into account a condition of an electrode in a heating chamber immediately before the driving of the electrode, an arrangement of heating zones, and the like.

### [Technical Solution]

An electrode drying device according to an embodiment of the present invention includes: a heating chamber with an electrode inlet and an electrode outlet, wherein an electrode is installed to be driven between the electrode inlet and the electrode outlet; a heating member installed in the heating chamber to heat the electrode at a final heating zone before the electrode outlet; and a controller configured to variably control an output of the heating member in response to a change in a temperature of the electrode, which is measured between the final heating zone and the electrode outlet, according to an operation time of the electrode drying device.

The electrode may be installed in the heating chamber to cause a driving direction of the electrode to be changed at least once.

The electrode, when stopped in the heating chamber, may be accelerated at a certain rate until a target driving speed is reached.

A plurality of heating zones each corresponding to one of driving directions of the electrode may be provided in the heating chamber, and the final heating zone may be a rearmost heating zone among the plurality of heating zones.

The controller corrects the temperature of the electrode by increasing or decreasing an output of the heating member, contrary to the change in the measured temperature of the electrode.

The controller may change the output of the heating member until the measured temperature of the electrode is maintained control, and a resultant output of the heating member may be maintained constant to correspond to the temperature of the electrode after the temperature of the electrode is maintained constant.

When the measured temperature of the electrode increases, the output of the heating member may be controlled by at least one of:
i) decreasing the output of the heating member in proportion to a rate of increase in the temperature of the electrode to prevent the temperature of the electrode from being increased excessively; and
ii) decreasing the output of the heating member in proportion to a rate of increase in the temperature of the electrode to maintain a target temperature of the electrode.

When the measured temperature of the electrode decreases, the output of the heating member may be increased in proportion to a rate of decrease in the temperature of the electrode to cause the temperature of the electrode to approximate a target temperature.

The controller may set an initial output of the heating member to be inversely proportional to an initial temperature of the electrode measured between the final heating zone and the electrode outlet.

The controller may set an initial output of the heating member to be proportional to a target driving speed of the electrode.

Another aspect of the present invention provides a method of drying an electrode that is started to be driven in a stationary state in a heating chamber. **In** the method, an output of a heating member at a final heating zone in the heating chamber is variably controlled in response to a change in a temperature of the electrode, which is measured between the final heating zone and an electrode outlet of the heating chamber, according to an operation time of an electrode drying device.

Specifically, when the measured temperature of the electrode changes, the change of the temperature of the electrode may be corrected by decreasing or increasing the output of the heating member, contrary to the change of the temperature of the electrode.

**In** the method, the output of the heating member may be changed until the measured temperature of the electrode is maintained control, and a resultant output of the heating member may be maintained constant to correspond to the temperature of the electrode after the temperature of the electrode is maintained constant.

**In** the method, an initial output of the heating member may be set to be inversely proportional to an initial temperature of the electrode measured between the final heating zone and the electrode outlet.

**In** the method, an initial output of the heating member may be set to be proportional to a target driving speed of the electrode measured between the final heating zone and the electrode outlet.

### [Advantageous Effects]

According to the present invention, a time required until a temperature of an electrode stabilizes can be significantly decreased by controlling an output of a heating member at the beginning of the driving of the electrode, in response to a change in an initial temperature of the electrode.

Accordingly, the quality stability of the electrode and operational productivity will improve significantly.

**In** addition, a deviation of a time required until the temperature of the electrode stabilizes can be decreased by setting an initial output of the heating member in response to an initial temperature of the electrode in a heating chamber or a target driving speed of the electrode.

### [Brief Description of the Drawings]

FIGS. 1 to 3 are graphs showing a principle of controlling an output of a heating member in an electrode drying process of the related art.
FIG. 4 is a schematic diagram illustrating an example of an electrode drying device of the present invention.
FIG. 5 is a graph showing a change in a temperature of an electrode over time when the electrode is heated by a high-output heating member.
FIG. 6 is a graph showing a change in a temperature of an electrode according to a time required to pass through a final heating zone, an operation time, and linear velocity.
FIG. 7 is a graph showing a change in an output of a heating member for compensating for a temperature change.
FIG. 8 is a graph showing an electrode temperature stabilization process according to an embodiment of the present invention.
FIG. 9 is a graph showing a change in an output and an effect of decreasing a temperature stabilization time according to an embodiment of the present invention.
FIG. 10 is a flowchart of an electrode drying process according to the present invention.
FIG. 11 is a graph showing an initial temperature of an electrode and a change in the temperature of the electrode according to an output.
FIG. 12 is a graph showing an initial output control principle according to another embodiment of the present invention.
FIG. 13 is a graph showing a change in a temperature of an electrode according to a target driving speed of the electrode and an output of a heating member.
FIG. 14 is a graph showing an initial output control principle according to another embodiment of the present invention.

### [Best Mode]

Hereinafter, the present invention will be described in detail. Before describing the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. It should be understood that when an element or part is referred to as being "connected" to another element or part, the element or part is connected directly or indirectly to the other element or part.

As used herein, terms such as "on" or "below", "front" or "back", or "dispose" or "arrange" are not intended to limit the invention and should be interpreted as providing examples of terms indicating positions or orientations.

An electrode drying device according to an embodiment of the present invention includes: a heating chamber with an electrode inlet and an electrode outlet, in which an electrode is installed to be driven between the electrode inlet and the electrode outlet; a heating member installed in the heating chamber to heat the electrode at a final heating zone before the electrode outlet; and a controller that variably controls an output of the heating member in response to a change in a temperature of the electrode, which is measured between the final heating zone and the electrode outlet, according to an operating time of the electrode drying device.

Another aspect of the present invention provides a method of drying an electrode that is started to be driven in a stationary state in a heating chamber. **In** the method, an output of a heating member at a final heating zone in the heating chamber is variably controlled in response to a change in a temperature of the electrode, which is measured between the final heating zone and an electrode outlet of the heating chamber, according to an operation time of an electrode drying device.

### [Embodiments of the Present Invention]

Hereinafter, the present invention will be described in detail.

### (First Embodiment)

Electrodes may be dried to remove moisture from the electrodes during the manufacture of a secondary battery. As described above, it is very important to quickly stabilize an initial temperature of the electrodes during the drying of the electrodes, in terms of operational productivity and quality stability.

The electrode drying device 100 of the present invention includes: a heating chamber with an electrode inlet 11a and an electrode outlet 11b, in which an electrode 1 is installed to be driven between the electrode inlet 11a and the electrode outlet 11b; a heating member installed in the heating chamber to heat the electrode 1 at a final heating zone Z3 before the electrode outlet 11b; and a controller that variably controls an output of the heating member in response to a change in a temperature of the electrode 1, which is measured between the final heating zone Z3 and the electrode outlet 11b, according to an operation time of the electrode drying device 100.

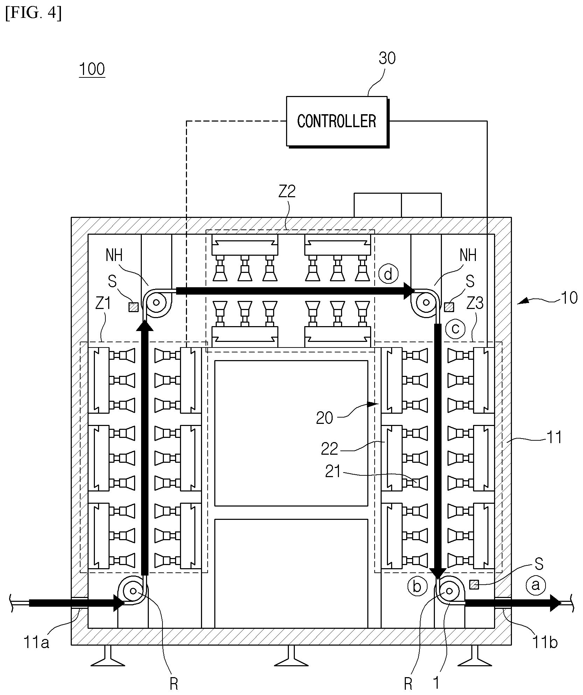

FIG. 4 is a schematic diagram illustrating an example of the electrode drying device 100 of the present invention.

The heating chamber 10 is an heat-dry space of the electrode 1, in which an electrode 1, a heating member 20, and guide rollers R are provided. FIG. 4 illustrates a chamber wall 11, and a space inside the chamber wall 11 is the heat-drying space. In some cases, the chamber wall 11 may be referred to as a chamber frame. For the convenience of illustration, the chamber wall 11 on a front surface of the heating chamber 10 is not illustrated but may be also formed on the front surface of the heating chamber 10 and thus forms a sealed heat drying space. An entrance door (not shown) may be formed on a side of the chamber wall 11 for loading the heating chamber 10 into the heating chamber 10 or maintenance of equipment. The electrode inlet 11a through which the electrode 1 is introduced and the electrode outlet 11b through which the electrode 1 after being dried is discharged are provided at the heating chamber 10. Although FIG. 4 illustrates that the electrode inlet 11a and the electrode outlet 11b are provided on a bottom of the heating chamber 10, the positions of the electrode inlet 11a and the electrode outlet 11b are not limited thereto and the electrode inlet 11a and the electrode outlet 11b may be provided on a top of the heating chamber 10. However, it is desirable to transfer the electrode 1 along a symmetrical driving path in the heating chamber 10, when either a relationship in arrangement between the heating member 20 in the heating chamber 10, a frame supporting the heating member 20, and a driving unit driving the frame or connection to other devices outside the heating chamber 10 is considered. Therefore, it may be desirable to form the electrode inlet 11a and the electrode outlet 11b at both sides of the top or bottom of the chamber wall 11 to face each other to match the symmetrical driving path of the electrode 1.

The electrode 1 to be dried is driven in a roll-to-roll state in the heating chamber 10. That is, the electrode 1 is supported and a direction thereof is changed by the guide rollers R and thus the electrode 1 is transferred in the roll-to-roll state along a certain driving path. In addition, an unwinder and a rewinder (not shown) that are configured to wind the electrode 1 may be provided outside the heating chamber 10 to drive the electrode 1 in the roll-to-roll state.

The heating member 20 may be a hot air injection device or an infrared heater. However, the type of the heating member 20 is not limited as long as one side or both sides of the electrode 1 can be heated appropriately by heat transfer methods such as conduction, convection, and radiation. In an embodiment of the present invention, an example in which an infrared heater is applied as the heating member 20 is shown. The infrared heater may include an infrared lamp 21 emitting infrared rays to the electrode 1, and a support 22 holder configured to support or hold the infrared lamp 21.

The heating member 20 may be installed to face a surface or back surface of the electrode 1 extending between the guide rollers R. Alternatively, a pair of heating members 20 may be installed to face both the surface and the back surface of the electrode 1.

To improve the efficiency of drying the electrode 1 within a limited space, the electrode 1 may be installed in the heating chamber 10 such that a driving direction of the electrode 1 may be changed at least once. For example, a driving path of the electrode 1 may be formed such that horizontal driving parts and vertical driving parts are alternately provided in the heating chamber 10. Referring to FIG. 4, three horizontal driving parts and two vertical driving parts are alternately arranged. However, the configuration of driving paths in the heating chamber 10 is not limited thereto, and various types of other driving paths may be provided in the heating chamber 10 as long as the electrode 1 can be efficiently dried.

The guide rollers R may be disposed in the heating chamber 10 to change the direction of the electrode 1. The guide rollers R are direction conversion rollers that support the electrode 1 when driven and changes the driving direction of the electrode 1. To increase a driving path of the electrode 1 in a limited space such as the heating chamber 10, the electrode 1 should not be driven only in one direction. In the present embodiment, the guide rollers R are arranged such that a driving path of the electrode 1 include horizontal driving parts and vertical driving parts that are alternately formed. Accordingly, the electrode 1 is transferred along a driving path increased as a direction of the electrode 1 is changed within the limited space, thereby increasing drying efficiency. In addition, when the driving path is increased, a space in which the heating member 20 may be placed also increases and thus more heating members 20 can be arranged to increase heating effect. The arrangement of the guide roller R and an electrode driving path configured accordingly are not limited to the example of FIG. 4, and a U-shaped path or a path with repetition of a U-shape may be configured unlike in FIG. 4.

A plurality of heating zones Z1, Z2, and Z3 may be provided in the heating chamber 10 to correspond to the electrode driving direction. In the heating zones Z1, Z2, and Z3, a plurality of heating member 20 as described above are installed opposite to the electrode 1 to heat the electrode 1. As shown in FIG. 4, the heating zones Z1, Z2, and Z3 may be installed parallel to each driving direction of the electrode 1. In the example of FIG. 4, the first heating zone Z1 at the electrode inlet 11a, the third heating zone (final heating zone) Z3 at the electrode outlet 11b, and the second heating zone Z2 between the first heating zone Z1 and the third heating zone Z3 are arranged in the heating chamber 10. The first heating zone Z1 is installed at a position at which a direction of the electrode 1 introduced into the electrode inlet 11a and driven horizontally is changed to cause the electrode 1 to be driven vertically. The second heating zone Z2 is installed at a position at which the direction of the electrode 1 driven vertically is changed to cause the electrode 1 to be driven horizontally. The third heating zone Z3 is installed at a position at which the direction of the electrode 1 driven horizontally is changed to cause the electrode 1 to be driven vertically. The direction of the electrode 1 passing through the third heating zone Z3 is changed to cause the electrode 1 to be driven horizontally and discharged through the electrode outlet 11b. Between the heating zones Z1, Z2, and Z3, there are non-heating sections NH on which the heating member 20 is not placed.

The arrangement of the heating zones Z1, Z2, and Z3 is not limited to the example described above, and the heating zones Z1 to Z3 may be arranged in a different form according to the size and shape of the heating chamber 10, the length and shape of an electrode driving path, etc. In any case, at least one heating zone is provided in the heating chamber 10. That is, the electrode 1 driven in the heating chamber 10 passes through one or more heating zones and is thereafter discharged through the electrode outlet 11b. Therefore, the heating chamber 10 necessarily includes at least one heating zone (e.g., the final heating zone Z3). When the heating zones Z1, Z2, and Z3 are installed in the heating chamber 10, the final heating zone Z3 is a rearmost heating zone among the heating zones Z1, Z2, and Z3.

Electrodes are manufactured and processed in a series of continuous production lines. Therefore, the electrode 1is connected to other pieces of equipment before and after the heating chamber 10. The electrode 1 may be repeatedly driven and stopped in the heating chamber 10 as the other pieces of equipment are operated or stopped. Alternatively, the electrode 1 may be repeatedly driven and stopped in the heating chamber 10 according to a drying schedule of the electrode drying device 100. For example, when an unwinder or a rewinder outside the heating chamber 10 are rotated, the electrode 1 wound around the unwinder or the rewinder is started to be driven in a stationary state. The electrode 1 is accelerated in the stationary state until a target driving speed is reached. For example, the electrode 1 that is in the stationary state may be accelerated at a certain rate until the target driving speed is reached. In addition, the heating member 20 in the heating chamber 10 may repeatedly perform heating or stop heating according to the driving or stopping of the electrode 1. When the electrode drying device 100 is stopped (when the heating member 20 and an electrode driving part are stopped), the electrode 1 is stopped in the heating chamber 10. When the electrode drying device 100 is started (when the heating member 20 and the electrode driving part are started), the electrode 1 is driven and discharged from the electrode outlet 11b. An operation time of the electrode drying device 100 is counted from a point in time when the electrode drying device 100 is started.

A temperature of the electrode 1 dried and discharged from the electrode outlet 11b of the heating chamber 10 does not stabilize immediately from a point in time when the electrode drying device 100 is started. As shown in FIGS. 1 to 3, the temperature of the electrode 1 may be maintained constant only after a certain stabilization time through control of an output (feedback control) of the heating member 20 and particularly an output of the heating member 20 at the final heating zone Z3. As described above, a temperature stabilization time of the dried electrode 1 has a significant effect on operational productivity and quality stability of the electrode 1 and thus it is important to effectively decrease the temperature stabilization time.

A point in time when the electrode 1 reaches the electrode outlet 11b while passing through the final heating zone Z3 depends on an initial position of the electrode 1 in the heating chamber 10. Accordingly, a temperature of the electrode 1 passing through the final heating zone Z3 changes continuously.

Additionally, a driving speed of the electrode 1 changes over time at the beginning of the driving of the electrode 1. Therefore, a time required to pass through the final heating zone Z3 greatly depends on an initial position of the electrode 1, thus causing a change in a temperature of the electrode 1.

In addition, the non-heating sections NH are formed in the heating chamber 10 according to an arrangement of the heating zones Z1, Z2, and Z3. A temperature of the electrode 1 passing through the non-heating sections NH may be relatively low.

In addition, when additional heating zones Z1 and Z2 are arranged before the final heating zoneZ3, a temperature of the electrode 1 passing through the final heating zone Z3 after passing through the additional heating zones Z1 and Z2 may be relatively high.

As described above, temperatures of electrodes passing through the final heating zone Z3 at the beginning of the driving of the electrodes are not constant due to various variables, such as positions of the electrodes in the heating chamber 10, the positions of the heating zones Z1, Z2, and Z3, times required to pass through the heating zones Z1, Z2, and Z3, a driving speed, etc. Therefore, temperatures of the electrodes discharged through the electrode outlet 11b are also not constant.

The present invention is characterized in that a temperature of an electrode at the beginning of the driving of the electrode as quickly as possible, thereby improving operational productivity and quality stability.

The controller 30 of the present invention variably controls an output of the heating member 20 in response to a change in a temperature of the electrode 1, which is measured between the final heating zone Z3 and the electrode outlet 11b, according to an operation time of the electrode drying device 100.

Because the temperature of the electrode 1 passing through the final heating zone Z3 changes, it is necessary to accurately measure the temperature of the electrode 1 at this point. Because a distance between the final heating zone Z3 and the electrode outlet 11b is short, a certain point between the final heating zone Z3 and the electrode outlet 11b may be set as a temperature measurement point. Preferably, a point immediately after the final heating zone Z3 may be set as a temperature measurement point. At the temperature measurement point, a temperature of the electrode 1 is measured by a temperature measuring member S. Various types of temperature sensors may be used as the temperature measuring member S. For example, a thermocouple that detects an electromotive force at a specific temperature, a resistance temperature sensor (RTD) and a thermistor that detect a resistance, a liquid thermometer whose state changes according to a temperature, or a bimetallic temperature sensor may be used as a contact type temperature sensor. However, when a temperature is measured by a contact type temperature sensor, the electrode 1 may be influenced negatively and thus it is preferable to use a non-contact type temperature sensor. As a non-contact type temperature sensor, for example, an infrared thermometer that detects temperature using infrared rays may be used.

The temperature measuring member S may be installed at exits of the heating zones Z1, Z2, and Z3. The relationship between the heating by the heating member 20 and a temperature of the electrode 1 may be grasped by measuring the temperature of the electrode 1 passing through each of the heating zones Z1, Z2, and Z3 by the temperature measuring member S.

In the present embodiment, a non-contact type temperature sensor (an infrared thermometer) was installed at a temperature measurement point immediately after the final heating zone Z3 to measure a temperature of the electrode temperature at this point.

At the beginning of the driving of the electrode 1, a temperature of the electrode 1 is low and thus may be increased quickly by heating the electrode 1 by a relatively high-output heating member 20.

**In** FIG. 4, ⓐ, ⓑ, ⓒ, and ⓓ represent positions of electrodes. ⓐ denotes a position of an electrode outside an electrode outlet, ⓑ denotes a position of the electrode at an exit of the final heating zone Z3 (particularly, between the final heating zone Z3 and the electrode outlet), ⓒ denotes a position of the electrode at an entrance of the final heating zone Z3, and ⓓ denotes a position of the electrode in a non-heating section immediately before the second heating zone Z2.

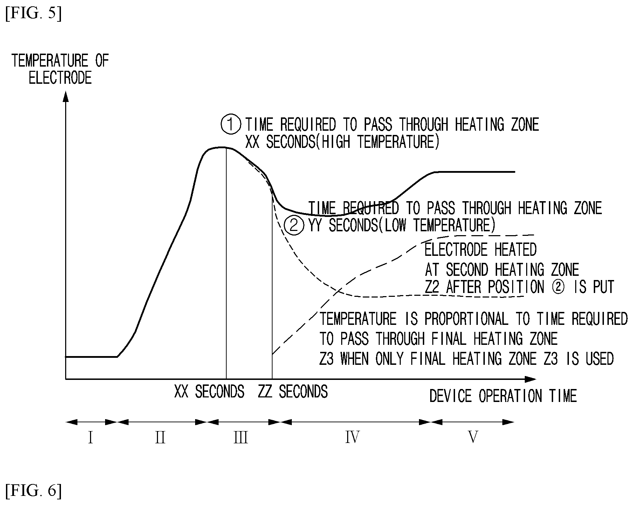

FIG. 5 is a graph showing a change in a temperature of an electrode according to an operation time of the electrode drying device 100 when the electrode is heated by the heating member 20 with a fixed high output.

A first part I of the graph of FIG. 5 shows a temperature of the electrode on the position ⓑ after the final heating zone Z3, before operation of an electrode operating device. That is, the electrode 1 is not heated and thus a temperature of the electrode 1 is low. Therefore, the temperature of the electrode is increased quickly by setting an output of the heating member 20 to be high at the final heating zone Z3.

A second part II of the graph of FIG. 5 shows that the temperature of the electrode immediately after the final heating zone Z3 increases gradually as the electrode is continuously driven and passes through the final heating zone Z3. For example, a temperature of the electrode on the position ⓒ at the entrance of the final heating zone Z3 before operation of a device is excessively high when the electrode passes through the final heating zone Z3, because the electrode has stayed for a longest time at the final heating zone Z3 and has been sufficiently heated by the heating member 20 with a high output. That is, when an operation time of an electrode drying device is XX seconds, a temperature of the electrode measured at the temperature measurement point is maximum.

A third part III of the graph of FIG. 5 shows a temperature of the electrode measured at the temperature measurement position and a change in the temperature when the operation time of the electrode drying device operation time is ZZ seconds. The electrode 1 is an electrode at the position ⓓ on a non-heating section NH between the final heating zone Z3 and the second heating zone Z2 before the device is operated. In addition, a speed of the electrode 1 has been increased when the electrode in the non-heating section NH passes through the final heating zone Z3. In this case, a time required for the electrode 1 to pass through the final heating zone Z3 is YY seconds less than XX seconds required for an electrode in the second part II. Therefore, when the electrode 1 in this section arrives at the temperature measurement point, a temperature of the electrode 1 decreases, starting from an excessively high temperature.

The fourth part IV of the graph of FIG. 5 shows that the temperature of the electrode 1 increases again. When there are no heating zones before the final heating zone Z3, the temperature of the electrode stabilizes downward due to an increase in the driving speed of the electrode. That is, because the electrode 1 passes through the final heating zone Z3 at a high speed, a temperature of the electrode measured at the temperature measurement point stabilizes while decreasing starting from an excessively high-temperature state.

However, in many cases, actually, additional heating zones such as the second heating zone Z2 are provided in the heating chamber to increases the productivity of a drying operation. In this case, even when the driving speed of the electrode increases, the electrode passing through the additional heating zone Z2 passes through the final heating zone Z3 and arrives at the temperature measurement point. Therefore, the electrode is additionally heated and thus a temperature of the electrode at the temperature measurement point increases gently again.

In a fifth part V of the graph of FIG. 5, the driving speed of the electrode reaches a target driving speed, and the driving speed and a temperature of the electrode heated in the additional heating zone Z2 and the final heating zone Z3 are balanced. In the fifth part V, the temperature of the electrode 1 stabilizes at last.

As described above, a temperature of the electrode 1 continuously measured at the temperature measurement point changes according to the operation time of the device. The trend of a change in the temperature may vary depending on the arrangement of the heating zones Z1, Z2, and Z3 in the heating chamber, a time required to pass through the final heating zone Z3, an initial temperature of the electrode, etc. However, a change in an initial temperature of electrode drying devices that have recently been used inevitably includes such a change. Due to such a change, it takes a considerable time until the temperature of the electrode stabilizes.

FIG. 6 is a graph showing a change in a temperature of an electrode according to a time required to pass through the final heating zone Z3, an operation time of a device, and a driving speed of the electrode.

Similar to FIG. 5, a temperature of the electrode is lowest in a first part (i) of the graph of FIG. 6 in which the electrode does not pass through the final heating zone Z3.

The temperature of the electrode increases to an excessively high temperature state, in a second part (ii) of the graph of FIG. 6 in which a time required to pass through the final heating zone Z3 increases continuously.

In a third part (iii) of the graph of FIG. 6 showing that the electrode located in a non-heating section NH passes through the final heating zone Z3, the electrode passes through the final heating zone Z3 while being not sufficiently heated due to an increase in the driving speed thereof. Therefore, the temperature of the electrode decreases.

After a third part (iii) of the graph of FIG. 6, the temperature of the electrode stabilizes downward as a linear velocity increases and a target driving speed is reached. In FIG. 6, an example in which the temperature of the electrode increases again due to heating in the additional heating zone Z2 is not illustrated.

As described above, in the present invention, an output of the heating member 20 is variably controlled in response to a change in a temperature of the electrode, which is measured between the final heating zone Z3 and the electrode outlet 11b, according to an operation time of an electrode drying device. When an electrode in a heating chamber is heated by the heating member 20 with a fixed output, a temperature of the electrode at a temperature measurement point changes in a pattern of rising-falling-stabilizing (when an influence of the additional heating zone Z2 is excluded) or a pattern of rising-falling-rising-stabilizing (when the influence of the additional heating zone Z2 is considered) as described above. In the present invention, an output of the heating member 20 installed at the final heating zone Z3 is changed from a fixed output to a variable output, in response to each timing of a change in a temperature of the electrode, thereby decreasing a time required until the temperature of the electrode stabilizes finally.

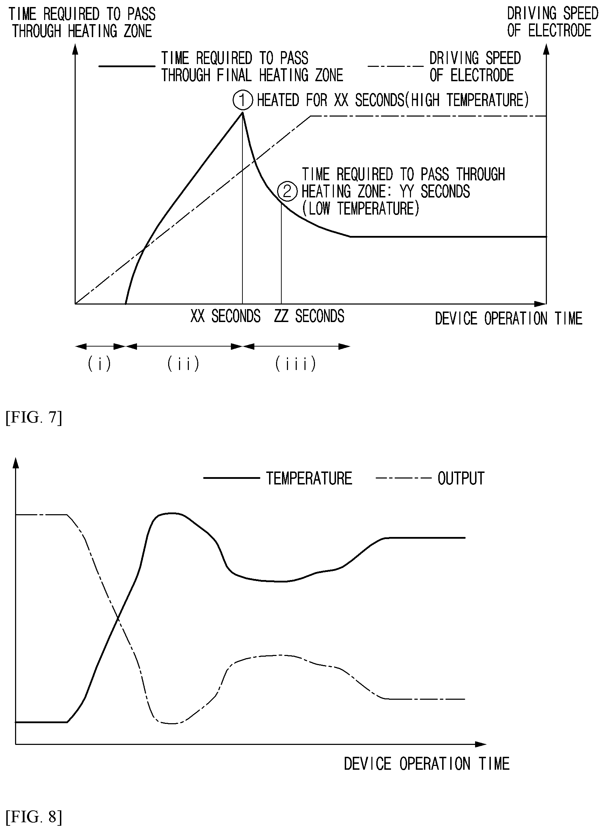

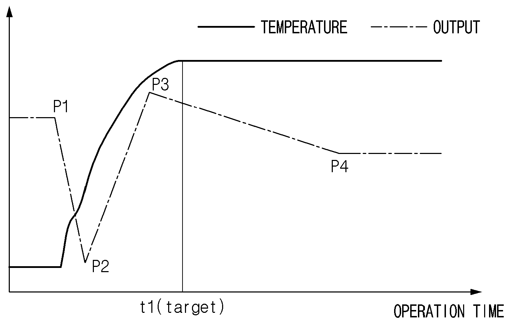

FIG. 7 is a graph showing a change in an output of the heating member 20 for compensating for a temperature change. **In** FIG. 7, the solid line represents a change in a temperature of an electrode, and the dashed line represents a change in an output. As shown in FIG. 7, the controller 30 may increase or decrease an output of the heating member 20, contrary to a change in the temperature of the electrode 1. Specifically, when the temperature of the electrode increases in proportion to a time required to pass through the final heating zone Z3, the output of the heating member 20 is increased in proportion to a rate of the increase.

Thereafter, when the temperature of the electrode 1 decreases gradually as the electrode 1 passing through a non-heating section NH passes through the final heating zone Z3 at a high speed, the output of the heating member 20 is decreased in proportion to the rate of decrease. When additional heating zones Z1 and Z2 are not considered, the temperature of the electrode stabilizes downward and thus the output of the heating member 20 may be controlled to stabilize upward accordingly.

**In** sections in which the temperature of the electrode increases again due to heating in the additional heating zones Z1 and Z2, the output of the heating member 20 is decreased again to match a rate of increase.

The output of the heating member 20 is variably controlled until a temperature of the electrode measured at a temperature measurement point is maintained constant. The output of the heating member 20 is maintained constant to correspond to the temperature of the electrode after the temperature of the electrode is maintained constant. **In** this case, the output of the heating member 20 may be set to a constant output required to maintain the temperature of the electrode constant.

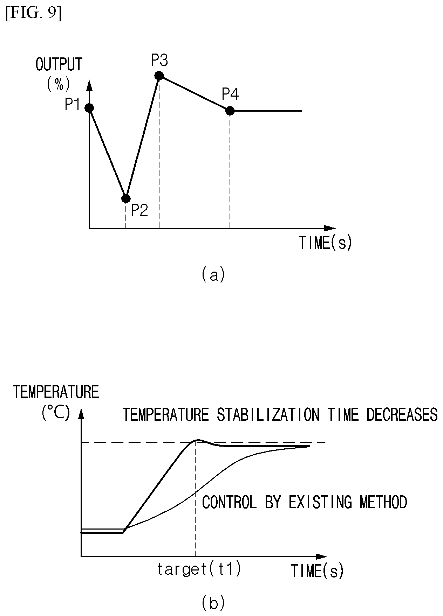

FIG. 8 is a graph showing an electrode temperature stabilization process according to an embodiment of the present invention, and FIG. 9 is a graph showing a change in an output and an effect of decreasing a temperature stabilization time according to an embodiment of the present invention.

Referring to FIGS. 8 and 9, it can be seen that according to the present invention, an electrode temperature stabilization time decreases greatly at the beginning of the driving of an electrode.

A change in an output of the heating member 20 indicated by a dashed line in FIG. 8 corresponds to the change in the output of the heating member 20 indicated by the dashed line in FIG. 7 and is a result of simplifying the change in the output of the heating member 20 in FIG. 7. **In** FIG. 8, an initial output P1 of the heating member 20 is set to be high so that a temperature of the electrode that is low may be increased quickly. Thereafter, the output of the heating member 20 is decreased to P2 in response to an increase in the temperature of the electrode in FIG. 7. By appropriately decreasing the output of the heating member 20, a temperature of the electrode may be prevented from being increased excessivel due to heating by a high-output heating member, unlike in the related art. That is, in this case, the output of the heating member 20 may be decreased within a range that a temperature of the electrode is not increased excessively, so that a rate of decrease in the output of the heating member has a slope proportional to the rate of increase in the temperature of the electrode.

Next, in FIG. 7, the output of the heating member 20 is increased to P3 in response to a decrease in the temperature of the electrode. Accordingly, the temperature of the electrode is prevented from decreasing and approximates a set target temperature. In this case, a rate of increase in the output may be appropriately determined within a range that allows the temperature of the electrode to approximate the target temperature.

Afterwards, the output of the heating member 20 is decreased gently to P4 when the temperature of the electrode increases again. In this case, a rate of decrease in the output of the heating member 20 is determined within a range that the target temperature of the electrode 1 is maintained constant. That is, the rate of decrease in the output of the heating member 20 may be set by taking into account both a factor causing the temperature of the electrode to increase again due to the additional heating zones Z1 and Z2 and a factor causing the temperature of the electrode to decrease due to a decrease in the output of the heating member 20, so that an overall temperature of the electrode may be maintained to be equal to the target temperature.

Finally, when the temperature of the electrode is maintained constant, a low output of the heating member 20 corresponding to the temperature of the electrode is maintained constant.

FIG. 9A illustrates only a change in an output of the heating member 20 according to an operation time of a drying device in FIG. 8.

FIG. 9B illustrates an effect of decreasing a temperature stabilization time by a method of variably controlling an output according to the present invention, compared to a method of controlling an output in proportion to a driving speed according to the related art.

As shown in FIGS. 8 and 9, a time required to stably achieve a target temperature is t1 (target time) and is far less than a stabilization time according to the related art. For example, it was confirmed that a stabilization time was reduced to about 50% or more of that in the related art, when controlling is performed according to the present invention. Because electrodes installed in a heating chamber are repeatedly driven and stopped, when a stabilization time decreases as described above during operation of a device once, operational productivity according to the present invention may improve significantly, when a total of operations per day, week or month are considered. In addition, the number of electrodes 1 produced in an unstable temperature range decreases greatly and thus the quality stability of the electrodes 1 may improve greatly.

Meanwhile, as illustrated in FIG. 4, the controller 30 of the electrode drying device 100 may determine whether to turn on or off equipment or the electrode drying device 100. For example, driving of an electrode may be started by transmitting an operation signal to driving parts (specifically, a motor and the like) of an unwinder and a rewinder in a stopped state before the electrode is driven. A heating command may be given to the heating zones Z1, Z2, and Z3 in the heating chamber, and particularly, the heating member 20 at the final heating zone Z3, in response to the start of the driving of the electrode. For example, an ON signal may be applied to the infrared lamp 21 of the heating member 20. In addition, the controller 30 may stop the electrode drying device 100 because of a specific cause (equipment failure, when an electrode is dried to a desired level, or the like) during the operation of the electrode drying device 100. That is, the driving parts of the unwinder and the rewinder may be turned off and an OFF signal may be transmitted to the infrared lamp 21.

In addition, the controller 30 may adjust a driving speed of the electrode by adjusting a rotation speed of the driving parts, e.g., motors. The controller 30 may also control the acceleration of the electrode until a target driving speed is reached, and whether to drive the electrode at a constant speed after the target driving speed is reached. In addition, the controller 30 may control an output of the heating member 20. For example, when the heating member 20 is a hot air blowing device, an output of the heating member 20 may be adjusted by adjusting revolutions per minute (RPM) of a blowing fan, a drying air temperature, or the like. When the heating member 20 includes the infrared lamp 21, an output of the heating member 20 may be adjusted by controlling the amount of infrared rays to be emitted to the electrode.

The present invention also provides a method of drying an electrode that is started to be driven in a stationary state in a heating chamber.

In the method of drying an electrode, an output of the heating member 20 at the final heating zone Z3 in the heating chamber is variably controlled in response to a change in a temperature of the electrode, which is measured between the final heating zone Z3 and the electrode outlet 11b of the heating chamber, according to an operation time of the electrode drying device 100.

Specifically, when the measured temperature of the electrode changes, the change of the temperature of the electrode may be corrected by decreasing or increasing the output of the heating member 20, contrary to the change of the temperature of the electrode.

For example, when the measured temperature of the electrode increases according to a time required to pass through the final heating zone Z3 or increases as the electrode passes through the additional heating zone Z2 before the final heating zone Z3 and the final heating zone Z, an output of the heating member 20 may be controlled by at least one of:
i) decreasing the output of the heating member 20 in proportion to a rate of increase in the temperature of the electrode to prevent a temperature of the electrode from being increased excessively; and
ii) decreasing the output of the heating member 20 in proportion to a rate of increase in the temperature of the electrode to maintain a target temperature of the electrode.

In addition, in the method of drying an electrode, as a time required for the electrode to pass through the final heating zone Z3 becomes relatively short when the electrode passes through the non-heating section NH before the final heating zone Z and/or due to an increase in the driving speed of the electrode, the output of the heating member 20 may be increased in proportion to a rate of decrease in the temperature of the electrode to cause the temperature of the electrode to approximate a target temperature when the measured temperature of the electrode decreases.

In an electrode drying method of the present invention, an output of the heating member 20 may be changed until a measured temperature of the electrode is maintained constant and be maintained constant after the temperature of the electrode is maintained constant.

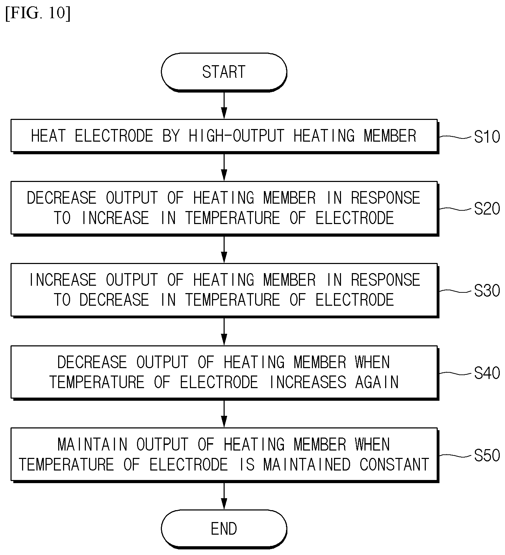

FIG. 10 is a flowchart of an electrode drying method according to an embodiment of the present invention.

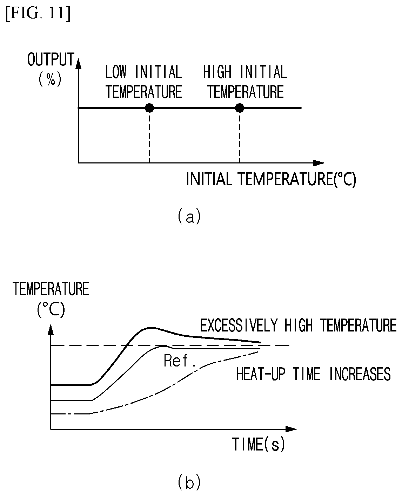

For example, an output of the heating member 20 at the final heating zone Z3 is changed as shown in FIG. 11, when there is a change in a temperature of an electrode at a temperature measurement point as shown in FIG. 7 due to high power applied at the beginning of the driving of the electrode in the electrode drying device 100 of FIG. 4.

Specifically, at operation S10, relatively high power is applied to the electrode to increase a temperature of the electrode quickly, because an initial temperature of the electrode is low.

In operation S20, the output of the heating member 20 is decreased to P2 of FIG. 8 in response to a change in the temperature of the electrode at the temperature measurement point according to a time required to pass through the final heating zone Z3. Basically, a rate of decrease in the output is proportional to a rate of increase in the temperature of the electrode, but the rate of decrease in the output and a point in time when the decreasing of the output will be ended may be appropriately determined so that the temperature of the electrode may be prevented from being increased excessively at the point in time when the decreasing of the output will be ended.

In operation S30, the output of the heating member 20 is increased to P3 of FIG. 8, in response to a decrease in the temperature of the electrode when the electrode passes through the non-heating section NH and the driving speed of the electrode increases. Basically, a rate of increase in the output is proportional to a rate of decrease in the temperature of the electrode, but the rate of increase in the output and a point in time when the increasing of the output is ended may be appropriately determined so that the temperature of the electrode may approximate a target temperature at the point in time when the increasing of the output is ended.

In operation S40, as the electrode passes through the additional heating zone Z2 and the final heating zone Z3, the output of the heating member 20 is gradually decreased to P4 in response to an increase in the temperature of the electrode again. In this case, a rate of decrease in the output of the heating member 20 and a point in time when the decreasing of the output is ended are determined within a range that the target temperature of the electrode is maintained.

Lastly, in operation S50, when the temperature of the electrode does not increase and is maintained constant, the output of the heating member 20 is maintained to be low.

### (Second Embodiment)

In the electrode drying device 100 and the electrode drying method of the first embodiment, when the heating member 20 with a fixed output (e.g., high output) is applied, the output of the heating member 20 is variably controlled to compensate for an inevitable change in an initial temperature of an electrode, caused by a position of the electrode in a heating chamber and an arrangement of the heating zones Z1, Z2, and Z3. Therefore, a time required until a temperature of the electrode close to the electrode outlet 11b stabilizes may decrease significantly as described above.

However, inevitably, there is a deviation in a time required until the temperature of the electrode stabilizes, according to an initial state of the electrode before the driving of the electrode or a target driving speed of the electrode.

FIG. 11 is a graph showing an initial temperature of an electrode and a change in the temperature of the electrode according to an output.

During continuous operation of equipment or the electrode drying device 100, a temperature of the electrode stopped when temporarily stopped equipment is restarted is high due to, for example, residual heat of the infrared lamp 21 and an internal temperature of the heating chamber. FIG. 11A illustrates a case in which an output of the heating member 20 is controlled to be constant when an initial temperature of an electrode measured at the temperature measurement point described above varies.

When the initial temperature of the electrode is high, the temperature of the electrode becomes excessively high even when the heating member 20 with the same initial output is applied. When the initial temperature of the electrode is low, a heat-up time increases when the heating member 20 with the same initial output is applied. Accordingly, there is a deviation in an electrode temperature stabilization time as shown in FIG. 11B.

Therefore, in order to prevent a temperature of the electrode from being increased excessively and an increase in the heat-up time and reduce a deviation in an electrode stabilization temperature, the controller 30 may set an initial output of the heating member 20 to be inversely proportional to the temperature of the electrode.

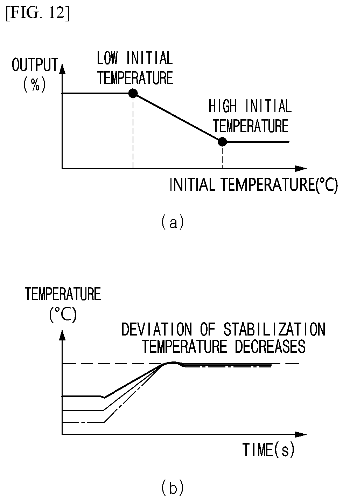

Referring to FIG. 12A, an initial output of the heating member 20 is set to be high when an initial temperature of an electrode is low, and is set to be low to be inversely proportional to the initial temperature of the electrode when the initial temperature of the electrode is high. The initial temperature of the electrode should be understood as an initial temperature of the electrode measured at a temperature measurement point in a heating chamber before the driving of the electrode is started. The initial output of the heating member 20 should be understood as an initial output of the heating member 20 at a point in time when the driving of the electrode is started.

Meanwhile, in the present embodiment, the setting of the initial output to be inversely proportional to the initial temperature of the electrode should not be understood as variably controlling an output of the heating member 20 according to an operation time of the electrode drying device 100 as in the first embodiment. The setting of the initial output to be inversely proportional to the initial temperature of the electrode should be understood as setting the initial output to be high when the initial temperature of the electrode is low and be low (in proportion to the initial temperature) when the initial temperature of the electrode is high. That is, the initial output of the heating member 20 is determined in consideration of an initial condition of the electrode in the heating chamber. Therefore, in order to variably control an output after the setting of the initial output, a linear velocity proportional control method of the related art or a variable control method performed in response to a change in a temperature according to the first embodiment may be employed. However, when the variable control method of the first embodiment is selected, a time required until the temperature of the electrode stabilizes decreases, and a deviation in a temperature stabilization time decreases as described below.

FIG. 12B illustrates that a deviation in an electrode temperature stabilization time decreases when an output of the heating member 20 is set to be inversely proportional to an initial temperature of the electrode, when the initial temperature of the electrode is high or low.

### (Third Embodiment)

It is inevitable that there is a deviation in an electrode temperature stabilization time according to a target driving speed of an electrode driven in a heating chamber.

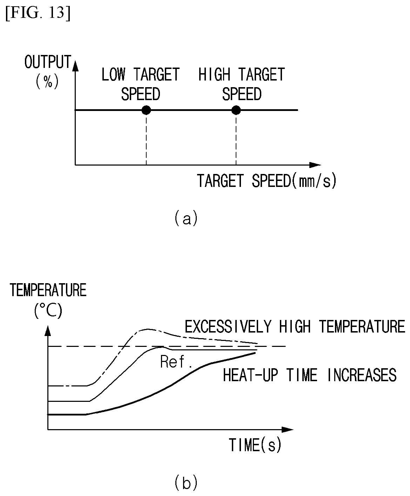

FIG. 13 is a graph showing a change in a temperature of an electrode according to a target driving speed of the electrode and an output of a heating member.

As shown in FIG. 13B, when the target driving speed of the electrode is high, the electrode cannot be sufficiently heated and thus a heat-up time of the electrode increases when the electrode reaches the electrode outlet 11b. On the other hand, when the target driving speed of the electrode is low, the electrode may be over-heated and thus a temperature of the electrode may be excessively high. Accordingly, there is a deviation in an electrode temperature 3 stabilization time as shown in FIG. 11B.

Therefore, in order to prevent a temperature of the electrode from being increased excessively and an increase in the heat-up time and reduce a deviation in an electrode stabilization temperature, the controller 30 may set an initial output of the heating member 20 to be proportional to the target driving speed.

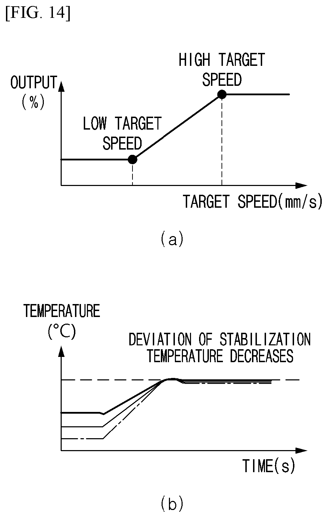

FIG. 14 is a graph showing an initial output control principle according to another embodiment of the present invention.

Referring to FIG. 14A, an initial output of the heating member 20 is set to be low when a target driving speed is low and is set to be high to be inversely proportional to the target driving speed when the target driving speed is high.

It should be understood that when the target driving speed is high, an initial driving speed, i.e., a speed acceleration ratio, of an electrode is high. Therefore, the electrode is driven at a relatively high speed in an initial acceleration section of the electrode. Accordingly, the electrode is driven while not being sufficiently heated and a heat-up time of the electrode increases at a temperature measurement point.

Conversely, it should be understood that when the target driving speed is low, the initial driving speed, i.e., the speed acceleration ratio, of the electrode is low. Therefore, the electrode is driven at a relatively low speed in an initial acceleration section of the electrode. Accordingly, the electrode may be over-heated and a temperature of the electrode at the temperature measurement point may be high excessively.

Similarly, in the second embodiment, in order to variably control an output after setting an initial output (a first output) of the heating member 20, the linear velocity proportional control method of the related art or the variable control. method performed in response to a change in a temperature of the first embodiment may be employed. However, when the variable control method of the first embodiment is selected, a time required until the temperature of the electrode stabilizes decreases, and a deviation in a temperature stabilization time decreases as described below.

FIG. 14B illustrates that a deviation in an electrode temperature stabilization time decreases when an output of the heating member 20 is set to be proportional to a target driving speed of an electrode, when the target driving speed is high or low.

As described above, according to the present invention, a time required until a temperature of an electrode stabilizes can be significantly decreased. Accordingly, operational productivity of an electrode drying process and quality stability of the electrode improve significantly.

According to an embodiment of the present invention, a deviation in a time required until the temperature of the electrode temperature stabilizes can be reduced by setting an initial output of the heating member 20, and particularly, an initial output of the heating member 20 at the final heating zone Z3 in response to an initial temperature of the electrode and a target driving speed.

The electrode drying device 100 and the electrode drying method of the present invention described above are applicable to not only a drying process after an electrode coating process but also sub-processes that are performed until an electrode is accommodated in a battery case and that require drying of an electrode.

The above description is only an example of the technical idea of the present invention and various modification and changes may be made by those of ordinary skill in the technical field to which the present invention pertains without departing from the essential features of the present invention.

Therefore, the drawings of the present invention set forth herein are intended not to limit the technical idea of the present invention but to describe the technical idea, and the scope of the technical idea of the present invention is not limited by the drawings. The scope of protection for the present invention should be interpreted based on the following claims and all technical ideas within the same scope as the present invention should be interpreted as being included in the scope of the present invention.

### (Reference Numerals)

1: electrode
10: heating chamber
11: chamber wall (chamber frame)
11a: electrode inlet
11b: electrode outlet
20: heating member
21: infrared lamp
22: support (holder)
30: controller
R: guide roller
first heating zone: Z1
second heating zone: Z2
third heating zone (final heating zone): Z3
NH: non-heating section
S: temperature measuring member (temperature sensor)

## Claims

1. An electrode drying device comprising:
a heating chamber with an electrode inlet and an electrode outlet, wherein an electrode is installed to be driven between the electrode inlet and the electrode outlet;
a heating member installed in the heating chamber to heat the electrode at a final heating zone before the electrode outlet; and
a controller configured to variably control an output of the heating member in response to a change in a temperature of the electrode, which is measured between the final heating zone and the electrode outlet, according to an operation time of the electrode drying device.

2. The electrode drying device of claim 1, wherein
the electrode is installed in the heating chamber to cause a driving direction of the electrode to be changed at least once.

3. The electrode drying device of claim 1, wherein
the electrode, when stopped in the heating chamber, is accelerated at a certain rate until a target driving speed is reached.

4. The electrode drying device of claim 2, wherein
a plurality of heating zones each corresponding to one of driving directions of the electrode are provided in the heating chamber, and
the final heating zone is a rearmost heating zone among the plurality of heating zones.

5. The electrode drying device of claim 1, wherein
the controller corrects the temperature of the electrode by increasing or decreasing an output of the heating member, contrary to the change in the measured temperature of the electrode.

6. The electrode drying device of claim 5, wherein
the controller changes the output of the heating member until the measured temperature of the electrode is maintained constant, and
a resultant output of the heating member is maintained constant to correspond to the temperature of the electrode after the temperature of the electrode is maintained constant.

7. The electrode drying device of claim 5, wherein,
when the measured temperature of the electrode increases, the output of the heating member is controlled by at least one of:
i) decreasing the output of the heating member in proportion to a rate of increase in the temperature of the electrode to prevent the temperature of the electrode from being increased excessively; and
ii) decreasing the output of the heating member in proportion to a rate of increase in the temperature of the electrode to maintain a target temperature of the electrode.

8. The electrode drying device of claim 5, wherein,
when the measured temperature of the electrode decreases, the output of the heating member is increased in proportion to a rate of decrease in the temperature of the electrode to cause the temperature of the electrode to approximate a target temperature.

9. The electrode drying device of claim 1, wherein
the controller sets an initial output of the heating member to be inversely proportional to an initial temperature of the electrode measured between the final heating zone and the electrode outlet.

10. The electrode drying device of claim 1, wherein
the controller sets an initial output of the heating member to be proportional to a target driving speed of the electrode.

11. A method of drying an electrode that is started to be driven in a stationary state in a heating chamber, the method comprising
variably controlling an output of a heating member at a final heating zone in the heating chamber in response to a change in a temperature of the electrode, which is measured between the final heating zone and an electrode outlet of the heating chamber, according to an operation time of an electrode drying device.

12. The method of claim 11, wherein,
when the measured temperature of the electrode changes, the change of the temperature of the electrode is corrected by decreasing or increasing the output of the heating member, contrary to the change of the temperature of the electrode.

13. The method of claim 12, wherein
the output of the heating member is changed until the measured temperature of the electrode is maintained control, and
a resultant output of the heating member is maintained constant to correspond to the temperature of the electrode after the temperature of the electrode is maintained constant.

14. The method of claim 11, wherein
an initial output of the heating member is set to be inversely proportional to an initial temperature of the electrode measured between the final heating zone and the electrode outlet.

15. The method of claim 11, wherein
an initial output of the heating member is set to be proportional to a target driving speed of the electrode measured between the final heating zone and the electrode outlet.
